(19) Europäisches Patentamt
European Patent Office
Office européen des brevets

(11) **EP 2 640 637 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(21) Anmeldenummer: **11799245.3**

(22) Anmeldetag: **18.11.2011**

(51) Int Cl.:
***B64D 10/00*** *(2006.01)*

(86) Internationale Anmeldenummer:
**PCT/EP2011/070433**

(87) Internationale Veröffentlichungsnummer:
**WO 2012/066114 (24.05.2012 Gazette 2012/21)**

(54) **BESCHLEUNIGUNGS-SCHUTZANZUG**

ANTI-G SUIT

COMBINAISON ANTI-G

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.11.2010 CH 19482010**

(43) Veröffentlichungstag der Anmeldung:
**25.09.2013 Patentblatt 2013/39**

(73) Patentinhaber: **G-Nius Ltd.**
**Singapore 539945 (SG)**

(72) Erfinder: **REINHARD, Andreas**
**CH-6340 Baar (CH)**

(74) Vertreter: **Felber, Josef**
**Felber & Partner AG**
**Dufourstrasse 116**
**8008 Zürich (CH)**

(56) Entgegenhaltungen:
**WO-A1-03/020586      WO-A1-2005/037645**
**WO-A1-2005/123504      GB-A- 2 055 287**

**Beschreibung**

Die vorliegende Erfindung betrifft einen Beschleunigungs-Schutzanzug für die Besatzung von Hochleistungsflugzeugen. Solche Schutzanzüge sind in einigen Ausführungen bekannt. Sie werden unterschieden in solche, die mit Luft als Druckfluid beaufschlagt werden, also sogenannte pneumatische Schutzanzüge und solche, die nach dem hydrostatischen Prinzip arbeiten, und entweder direkt den hydrostatischen Druck auf den Träger des Schutzanzuges einwirken lassen oder solchen, die mit Flüssigkeitsadern versehen sind, welche im Wesentlichen in der lokalen und momentanen Z-Achse verlaufen und durch Verkürzung des Umfanges des Schutzanzuges den Binnendruck entsprechend der Flüssigkeitssäule erhöhen. Diese werden beide vereinfachend hydrostatische Schutzanzüge genannt, obwohl die Flüssigkeit keineswegs auf Wasser beschränkt ist.

Im Besonderen betrifft die Erfindung einen pneumatischen Schutzanzug. Solche Schutzanzüge sind einige bekannt, so aus EP 1 755 948 als dem nächstliegenden Stand der Technik, ferner aus US 2007/0289050, JP 2008 012 958 und DE 10 2007 053 236. Aus WO03/020586 A1 sind folgende Merkmale bekannt: Ein Schutzanzug aus dehnungsarmem Material mit doppelwandig ausgeführten Fächern oder Taschen. In diese Fächer sind Luftschläuche aus flexiblem Kunststoff eingelegt. Die Luftschläuche sind mit Beschleunigungs-abhängigen Luftdrucken beaufschlagbar und dadurch als Blasen dehnbar.

In solchen Schutzanzügen werden in aller Regel die zu schützenden Körperregionen und/oder Körperteile umgeben vom Schutzanzug oder Teilen davon. Die durch die oft extremen Beschleunigungen besonders beanspruchten Körperteile und -Regionen werden dabei innerhalb solcher Schutzanzüge durch mit Druckluft oder -Gas beaufschlagte Blasen oder Schläuche in Abhängigkeit der Beschleunigungen in der momentanen und lokalen Z-Achse, $G_z$ genannt, unter Druck gesetzt, womit dem hämostatischen Druck entgegengewirkt wird. Dies ist die allgemeine Aufgabe solcher Schutzanzüge.

Der Aufwand für einen hinreichenden G-Schutz ist mit herkömmlichen Anzügen noch beträchtlich und es ist eine Stossrichtung dieser Erfindung, diesen Aufwand mit einem neuen Anzug zu reduzieren. Dieser Schutzanzug sollte unter allen Umständen und in allen Bedingungen ohne spezielle Verhaltensweisen des Trägers wirksam sein, wie solche bei herkömmlichen Anzügen insbesondere im Grenzbereich der Fall sind. Herkömmliche Schutzanzüge sind verhältnismässig schwer, steif, und der Träger kommt darin leicht ins Schwitzen, was seine Befindlichkeit negativ beeinträchtigt. Einige Anzüge können beim Träger Fuss- und Armschmerzen (footand armpain) verursachen und gegen das von ihnen induzierte Atmen unter Überdruck (Positive Pressure Breathing PPB) bestehen allgemein medizinische Zweifel. Ein verbesserter G-Schutzanzug sollte daher nebst dem absolut zuverlässigen G-Schutz, das heisst einen sogenannten G-Lock zuverlässig zu verhindern, diesen G-Schutz mit möglichst geringem Aufwand sicherstellen, möglichst ohne ein Atmen unter Überdruck nötig zu machen, und er sollte ohne Einflussnahme des Träger, das heisst ohne "Anti G Straining Maneuvers" (AGSM) durch den Träger, seine optimale Wirkung in allen Situationen entfalten und einen möglichst hohen Tragkomfort bieten, ähnlich wie Unterwäsche. Dadurch soll er einer frühzeitigen Ermüdung des Trägers vorbeugen und Schmerzen zuverlässig verhindern. Ausserdem soll er einen automatischen Höhenschutz bieten, das heisst bei einem plötzlichen Druckabfall hinreichenden Schutz gewährleisten, und auch eine Auftriebsunterstützung beim Eintauchen in Wasser erzeugen. Optional soll er eine aktive Kühleinrichtung einschliessen. Der Anzug soll als Standardanzug hergestellt werden können und ein Massschneidern solcher Anzüge für einzelne Träger wie das bisher nötig war obsolet machen.

Dies wird bewirkt entweder durch ein Druckregime, bei dem verschiedene Teile des Körpers bzw. mit den Reaktionskräften auch des Schutzanzuges mit verschiedenen Drücken beaufschlagt werden. Hierzu sind die verschiedenen Regionen des Schutzanzuges unterschiedlich ausgestaltet.

Da die Anpressdrücke von der Hülle des Schutzanzuges auf den Körper des Trägers verschieden sind, je nach dem zu schützenden Körperteil, sind die Blasen, die diese Drücke bewirken, verschieden gross zu bemessen. Wie den Dokumenten zum Stand der Technik zu entnehmen ist, sind die Volumina der Blasen verhältnismässig gross, was im Verbund mit der Kompressibilität von Luft und unter Berücksichtigung der hohen Onset-Raten von $G_z$ zu einer verlangsamten Reaktion der Schutzanzüge führt.

Die Aufgabe der vorliegenden Erfindung ist es, den Binnendruck des durch den Schutzanzug geschützten Körpers nach Massgabe der relativen Höhe des zu schützenden Körperteils und nach Massgabe der wirkenden lokalen und momentanen Beschleunigung $G_z$ zu steuern und ferner die zu füllenden Volumina klein zu halten. Der Schutzanzug soll überdies komfortabel zu tragen sein, ohne nach einer genauen Passform zu verlangen. Er soll einfach an- und auszuziehen sein, ohne Überdruckatmung auskommen und Zusatzfunktionen wie einen Höhenschutz und eine Klimatisierung bieten.

Eine weitere Aufgabe dieser Erfindung ist es, durch rythmische Veränderung dieses Binnendruckes den venösen Rückfluss des Trägers zu erleichtern. Die Lösung der gestellten Aufgabe ist wiedergegeben im Patentanspruch 1 hinsichtlich ihrer Hauptmerkmale, in den nachfolgenden Ansprüchen hinsichtlich weiterer vorteilhafter Ausbildungen.

Der erfindungsgemässe Anzug besteht aus einer Hülle eines dehnungsarmen textilen Materials, sowohl hinsichtlich der Faserdehnung als auch der Bindungsdehnung. In dieser Hülle und an ihr befestigt sind Fächer, beispielsweise durch Nähen oder Kleben oder Schweissen aufgebracht. Diese Fächer werden gebildet durch Aufdoppeln der Hülle, indem ein Streifen textilen Materials innen oder aussen auf die Hülle aufgebracht wird, so dass er nur an seinem Rand mit der Hülle verbunden ist. Diese Fächer bestehen ebenfalls aus textilen Materialien, im ersten Fall aus dem gleichen Material wie die Hülle, im zweiten Fall beispielsweise aus einem dehnbaren Gewirk, das auf der Innenseite der Hülle liegt. In diese Fächer sind flexible Schläuche aus einem Elastomer eingelegt, welche sich bei Druckbeaufschlagung dehnen. Die erstgenannten Fächer können durch Dehnung ihrer dem Körper des Trägers gegenüberliegenden Seite über ihr Volumen im entspannten Zustand hinaus expandiert werden. Sie setzen den Beschleunigungs-Schutzanzug auf einem individuellen Körper getragen gewissermassen unter eine Vorspannung, bis die Umlaufspannung σ im Körper des Trägers den notwendigen Binnendruck aufbaut. Die zweitgenannten, nicht dehnbaren Fächer spannen die Hülle weiter, indem sie unter erhöhtem Druck im Luftschlauch in ihrer Breite zusammengezogen werden.

In einer Erweiterung des Erfindungsgedankens können in Fächern der ersten Art, welche sich von den Füssen bis zum Halsausschnitt erstrecken, optional mit Wasser teilweise gefüllte Adern eingelegt werden. Diese enthalten mehrere Lufttaschen, welche innen in den Wasseradern befestigt sind und mit Druckluft sequentiell von unten nach oben befüllt werden. Damit wird das Wasser von unten nach oben verdrängt und baut einen rhythmisch ansteigenden und, bei sequentiellem oder totalem Entlüften der Lufttaschen, einen sinkenden Druck im Beschleunigungs-Schutz-Anzug auf. Dies entlastet den Kreislauf bzw. erhöht den Füllgrad des Herzens.

Anhand der beigefügten Zeichnung wird der Erfindungsgedanke näher erläutert. Es zeigt:

Fig. 1a      einen schematischen Querschnitt durch ein Körperteil im inaktiven Zustand des Schutzanzuges,

Fig. 1b      denselben Querschnitt im aktivierten Zustand des Schutzanzuges,

Fig. 2a, b    einen Luftschlauch erster Art, genannt "Spacer", im Querschnitt,

Fig. 3a, b    einen Luftschlauch zweiter Art, genannt "Muskel", im Querschnitt,

Fig. 4        ein Fach mit inaktivem Spacer und inaktiver Höhendruck-Ausgleichsblase,

Fig. 5        ein Fach mit aktivem Spacer und aktiver Höhendruck-Ausgleichsblase,

Fig. 6        eine Frontalansicht des Schutzanzuges,

Fig. 7        eine Rückansicht des Schutzanzuges,

Fig. 8        einen schematischen Längsschnitt durch eine Wasserader,

Fig. 9a       eine Draufsicht auf einen Klimatisierungsschlauch ohne Luft,

Fig. 9b       eine Draufsicht auf einen Klimatisierungsschlauch mit Luft,

Fig. 10       ein Diagramm mit Vergleichsdaten zur ertragbaren G-Belastung beim Tragen eines herkömmlichen Schutzanzuges und beim Tragen des erfindungsgemässen Schutzanzuges,

Fig. 11       ein Diagramm mit Vergleichsdaten zum Herzfrequenzverlauf bei G-normalisierter Belastung beim Tragen verschiedener herkömmlicher Schutzanzüge und beim Tragen des erfindungsgemässen Schutzanzuges,

Fig. 12       die G-Belastungsgrenzen in der z-Achse des erfindungsgemässen Schutzanzuges im Vergleich zu drei herkömmlichen Schutzanzügen A, B und C,

Fig. 13       die durchschnittliche Variation der kardiovaskulären Parameter, das heisst der Direktkomponenten (Gleichanteile) im Vergleich zur Grundlinie in Betrachtung der normalisierten und relativ erreichten Gz Belastung bei verschiedenen Schutzanzügen.

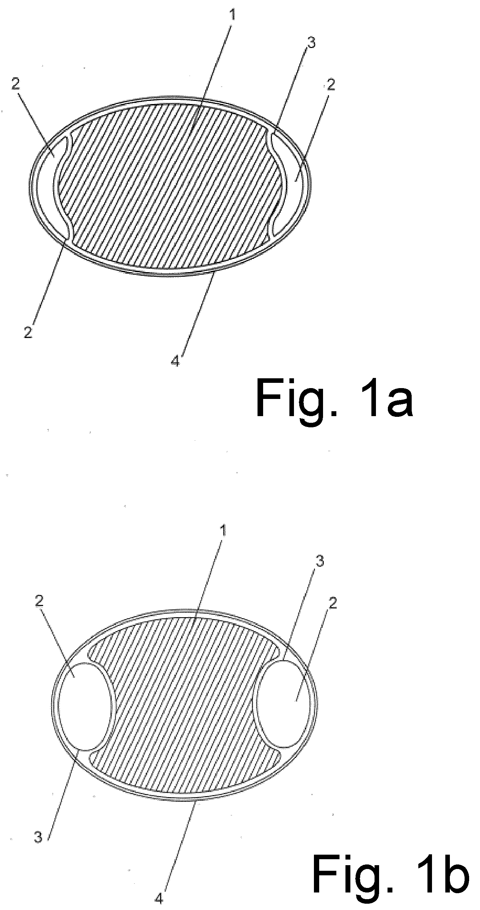

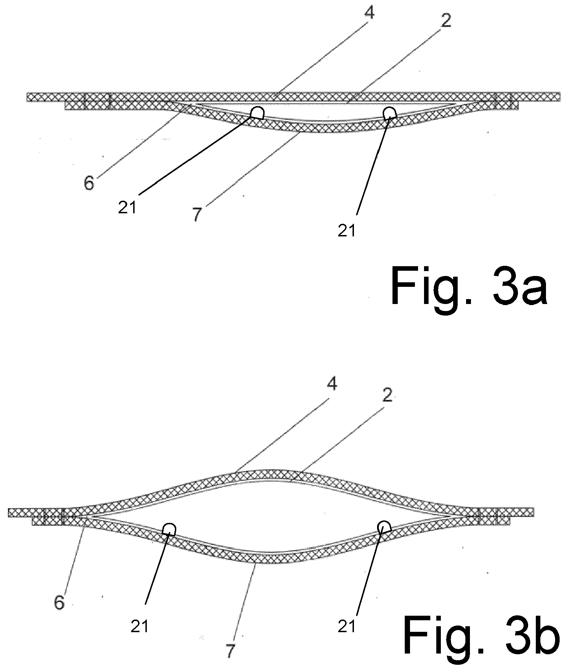

Die Figur 1a zeigt schematisch einen Querschnitt durch ein Körperteil 1, beispielsweise einen Oberschenkel. Dieses Körperteil 1 ist, satt anliegend, umhüllt von einer textilen Hülle 4 eines Schutzanzuges. Im Innern der textilen Hülle 4 sind beispielsweise zwei Luftschläuche 2 befestigt. In Figur 1a sind die Luftschläuche 2 leer und liegen flach zwischen dem Körperteil 1 und der Hülle 4. Die Luftschläuche 2 bestehen aus einem Elastomer, sind also flexibel und dehnbar. Sie sind, wie in Fig. 3 dargestellt, mindestens einseitig umhüllt von dehnbaren textilen Über-zügen, an welchen sie im Innern des Anzuges 4 befestigt sind, das heisst auf jener Seite der textilen Hülle 4, die dem Körperteil zugewandt ist. Werden nun die Luftschläuche 2 mit Druckluft beaufschlagt, so spannen sie die Hülle 4 und bauen also eine Umlaufspannung σ auf, welche über die Beziehung

$$\sigma = p \cdot r$$

einen Druck p im Innern des Körpergewebes aufbaut. Also ist

$$p = \frac{\sigma\,[N/m]}{r\,[m]} \quad \left\lfloor \frac{N}{m^2} \right\rfloor$$

p umgekehrt proportional zur lokalen Krümmung r des Körperteiles.

Der Anzug, bestehend aus der Hülle 4, ist vorzugsweise aus einem wenig dehnbaren textilen Material, aus beispielsweise Aramid-Fasern gefertigt, mit wenig Bindungs- und Faserdehnung. Er wird direkt auf der Haut getragen, womit auch die Kompressibilität einer klassischen Unterwäsche wegfällt. Optional kann der Anzug aus hygienischen Gründen mit einer gesondert angepassten, hauchdünnen textilen Unterwäsche getragen werden. Der Schutzanzug ist indessen in einer konventionellen Waschmaschine waschbar.

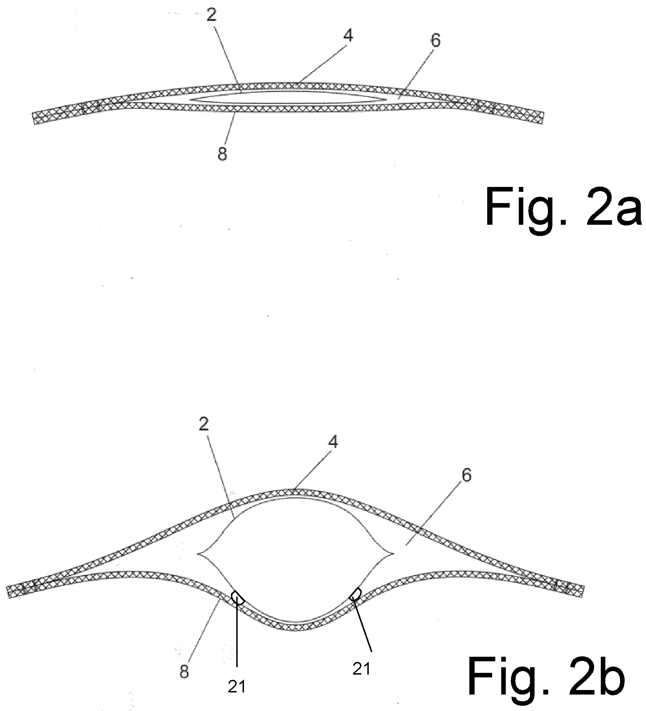

Zum Aufbau des erforderlichen Binnendruckes im Körper des Trägers dienen nun die Luftschläuche einer besonderen ersten Art nach den Figuren 2a, b als Verdränger, die wegen ihrer Funktion fortan "Spacer" genannt werden. Die Figur 2a zeigt einen Querschnitt durch ein Fach 6 eines solchen "Spacers". Das Fach 6 in den Figuren 2a, b besteht nun auf seiner dem Körper des Trägers zugewandten Seite aus einem Deckblatt 8 aus einem elastischen textilen Gewebe oder Gewirk, während die gegenüberliegende Seite des Textilfaches 6 aus unelastischem Material besteht. Die Ausbuchtung des Deckblatts 8 trägt hier kaum etwas zur Umlaufspannung σ bei, während die Hülle 4 den Druck lediglich weiterleitet. Hingegen drückt ein solcher Luftschlauch 2 mit dem Deckblatt 8 gegen den Körper des Trägers und bewirkt in ihm direkt den notwendigen Binnendruck. Diese "Spacer" bewirken also nicht eine direkte und gezielte Verkürzung des Querschnitts des Textilfaches, sondern vielmehr wirkt der "Spacer" durch Druck auf die elastische Innenseite 8 des Textilfaches 6, welche auf der Körperoberfläche des Trägers aufliegt und somit einen lokalen Druck auf dieses Körperteil und die darin liegenden Gefässe ausübt. Die damit als Reaktionskraft aufgebaute Umlaufspannung σ wird natürlich durch die Hülle 4 auch auf den Rest des Körperteils übertragen, sodass eine satte Spannung des Schutzanzuges auf dem Körper erzielt wird. In erster Linie wird mit diesen "Spacern" daher die Körper-Topografie des Trägers kompensiert. Der Anzug wird damit für verschiedene Körperoberflächen passend gemacht und es wird eine Grundspannung erzeugt, sodass der Anzug überall satt auf der Körperoberfläche eines individuellen Trägers des Anzugs anliegt. Dieses ist also die primäre Funktion dieser als "Spacer" bezeichneten Fächerart. Um den erforderlichen Binnendruck aufzubauen, ist das aber, je nach Tagesform des Trägers des Anzuges, nicht immer genügend, weswegen noch andere Fächer zweiter Art zum Tragen kommen, wie noch beschrieben wird.

Es ist ja mit die Aufgabe des erfindungsgemässen Anzuges, nicht für jeden Piloten ein massgeschneidertes Kleidungsstück zur Verfügung stellen zu müssen, sondern innerhalb einer Grössenklasse von Trägern mit einem Standard-Anzug auszukommen. Die Druckbeaufschlagung von Schläuchen 2 erster Art - fortan wie erwähnt "Spacer" genannt - dient genau diesem Zweck.

Die Luftschläuche 2 der "Spacer" können mit längs derselben verlaufenden Belüftungsadern 21 versehen sein, welche mit lippenförmigen Öffnungen versehen sind. Die durch diese lippenförmigen Öffnungen kann Luft austreten, die von einem gesonderten, im Schutzanzug integrierten elektrischen Ventilator eingeblasen wird. Dieser im Schutzanzug eingebaute Ventilator saugt von aussen Luft an und bläst sie in die Lüftungsadern 21. Die Luft gelangt dann in das Innere der Textiltasche und von dort aufgrund des darin herrschenden Überdruckes durch das anliegende durchlässige Textilgewebe auf die Körperoberfläche des Trägers, wo sie für ihn einen Kühleffekt bewirkt.

Die Figuren 3a, b zeigen einen Querschnitt durch einen dehnbaren Luftschlauch 2 in einem Textilfach zweiter Art. Der dehnbare Schlauch 2 aus einem Elastomer ist eingelegt in ein textiles Fach 6 von überall gleichem, also wenig dehnbarem, textilen Material, wie die Hülle 4 des Anzuges. An diesem textilen Fach 6 sind die Luftschläuche im Innern des Anzuges 4 befestigt, wobei die Querschnittskonturen der Luftschläuche überall jener des textilen Faches 6 nachgeführt sind. Wenn der Luftdruck im Luftschlauch höher ist als ausserhalb, so bläht er sich auf. Der Textilstoff des Textilfaches kann nirgends gedehnt werden und somit wird die Breite des Textilfaches, verglichen mit seiner Breite im flachen Zustand des Textilfaches, verkürzt. Der Schutzanzug zieht sich daher um die Extremitäten des Trägers kräftig zusammen. Optional sind wie hier gezeigt Belüftungsadern 21, die im Schutzanzug gesondert verlaufen, auf den Luftschläuchen 2 im Textilfach 6 entlanggeführt und so in den Luftschlauch 2 integriert, dass eine glatte Oberfläche gebildet ist, welche an der Innenseite des Textilfaches 6 anliegt. Man sieht diese Belüftungsadern 21 hier im Querschnitt. Auf der dem Textilstoff zugewandten Seite weisen sie eine Anzahl lippenförmige Öffnungen auf. Bei erhöhtem Innendruck öffnen diese Lippen und Luft strömt hernach diffundierend durch das luftdurchlässige anliegende Textilmaterial auf die Körperoberfläche des Trägers und kühlt sie. Die Luftversorgung erfolgt über den elektrischen Ventilator wie schon beschrieben.

In der Figur 3a ist der Schlauch 2 leer, in der Figur 3b teilweise luftgefüllt. Hier erkennt man, dass die separaten Belüftungsadern 21 so in den Luftschlauch 2 eingelassen sind, dass eine glatte Oberfläche gebildet wird. Das Fach 6 wird gebildet von der Hülle 4 und einem - innenliegenden - Deckblatt 7, beide aus dem gleichen, wenig elastischen Material der Hülle 4 des Anzuges. Beim Aufblasen des Luftschlauches 2 füllt dieser zunächst das ganze Fach 6 und verkürzt damit die Querdimension bzw. Breite des Faches 6. Deshalb werden die so aufgebauten Textilfächer als "Muskeln" bezeichnet. Diese "Muskeln" verkürzen also ihren nicht dehnbaren Mantel und sie generieren dabei einen homogenen Druck auf den Körper des Trägers.

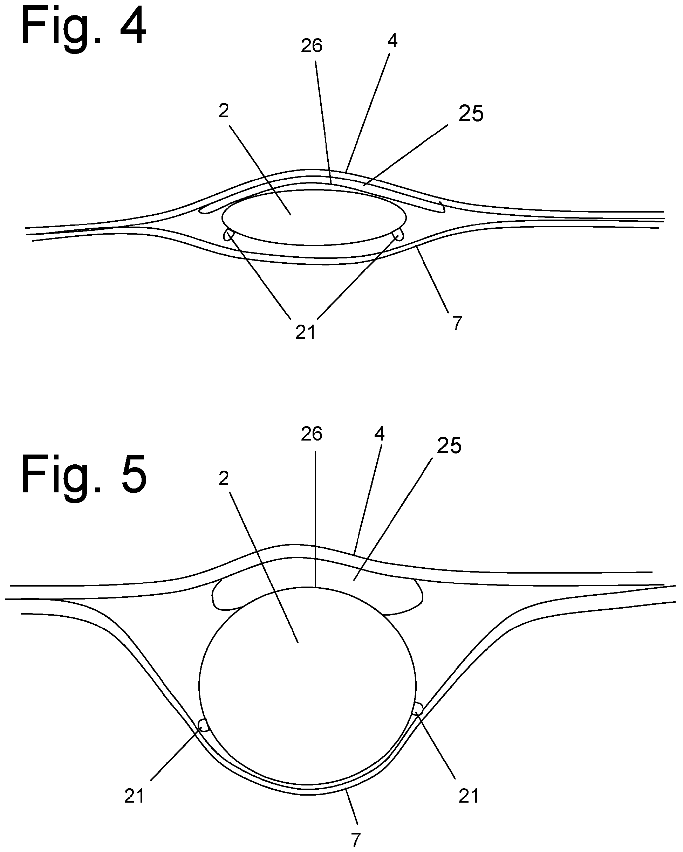

In Figur 4 ist eine weitere Ausführung eines Textilfaches erster Art mit einem als "Spacer" wirkenden Luftschlauch 2 gezeigt, mit den beiden unterschiedlichen Seiten 4 und 7 des Textilfaches, nämlich der unelastischen Seite 4 und der elastischen Seite 7. Als Besonderheit ist hier zwischen dem Luftschlauch 2 und der unelastischen Aussenseite des Textilfaches eine dünnwandige, geschlossene, gesonderte Kunststoff-Blase 25 eingearbeitet. Bei sinkendem Aussendruck wird diese im Volumen aufgebläht und die innere Seite 26 der Blase 25, welche dem Luftschlauch 2 des "Spacers" gegenüberliegt, legt sich an diesen an und wirkt als automatischer Ausgleich des abnehmenden Höhendruckes beim Steigen mit dem Flugzeug. In der Figur 4 ist diese Blase 25 inaktiv, weil der Aussendruck nicht wesentlich abgefallen ist. Die Figur 5 zeigt, was passiert, wenn der Aussendruck abfällt. Entsprechend dehnt sich die Blase 25 aus, wie auch der Luftschlauch 2 des Spacers. Es wird damit ein Ausgleich zum abnehmenden Höhendruck erzeugt. Diese zusätzliche Blase 25 kann auch dadurch erzeugt sein, dass auf den Luftschlauch 2 aussen eine zusätzliche dünne elastische Gummimembrane aufkaschiert wird, die dann an der Hülle 4 anliegt, sodass also der Luftschlauch 2 selbst mit seiner Aussenseite die Innenseite 26 der Blase 25 bildet. Dadurch wird diese Kombination im Schutzanzug weniger steif.

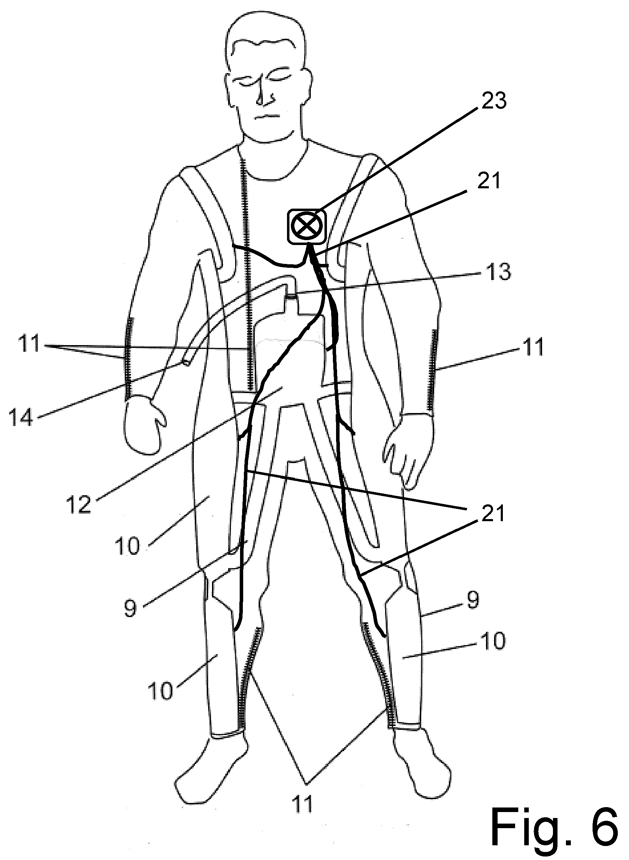

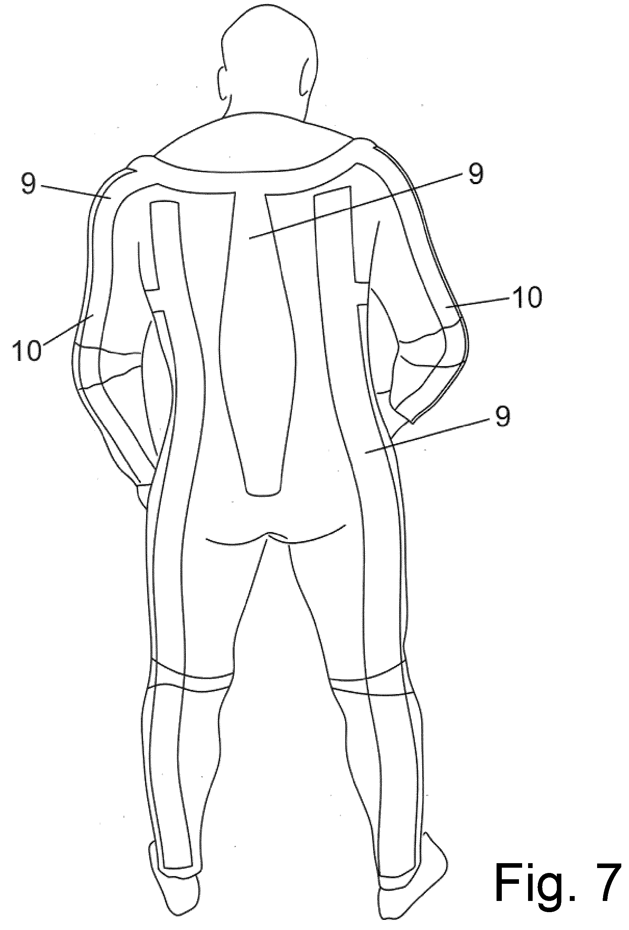

Die Figuren 6 und 7 zeigen einen nach dieser erfinderischen Idee aufgebauten Anzug mit einerseits als "Spacern" wirkenden Textilfächern, und andrerseits mit als "Muskeln" wirkenden Textilfächern. Hier sind die Luftschläuche gemäss ihrem Typ gekennzeichnet, der den einzelnen Orten vorzugsweise zugeordnet wird. Da dies aber vom Körperbau des Trägers abhängt, aber auch der individuellen Präferenz unterliegen kann, sind solche Zuordnungen immer auch alternativ möglich. Luftschläuche erster Art - also "Spacer" gemäss Fig. 2a, b - tragen die Bezugsziffer 9, solche zweiter Art, das heisst als "Muskeln" wirkende Luftschläuche nach Fig. 3a,b die Ziffer 10. Vorzugsweise weisen etwa 40% der den Körper bedeckenden Textilfächer eines Schutzanzuges entweder eine Spacer-Funktion oder eine Muskel-Funktion auf, oder aber beide Funktionen nehmen etwa dieselbe Textilfächerfläche auf dem Körper eines Trägers ein.

Ein Anzug nach Fig. 6 weist an allen vier Extremitäten einen Reissverschluss 11 auf, ebenso eine vom Hals bis zur eine Leiste reichende Hauptöffnung, wobei dieser Reissverschluss anders als hier gezeigt auch zentral angeordnet sein kann. Eine zentrale Druckblase 12, mit welcher alle Luftschläuche 9,10 direkt oder indirekt kommunizieren, trägt ein Hauptventil 13, an welchem die Verbindung zur Druckluftversorgung des Flugzeuges hergestellt wird, in der Regel mit einem Schlauch 14. Längs der Arme und Beine ist je ein Luftschlauch 9,10 entlanggeführt, wobei sich beide von oberhalb der Knie bis über den Thorax hinauf ziehen können. Die Füsse und die Hände bleiben vom Anzug unbedeckt.

Das Hauptventil 13 ist zugleich ein Sicherheitsventil. Dieses schliesst die Druckblase 12 sofort von der Aussenwelt ab, sobald

- der Kabinendruck aus irgendeinem Grund zusammenbricht, oder
- die Druckversorgung durch das Flugzeug ausfällt.

In einem solchen Augenblick wirkt der Anzug als Druckanzug und hält die Druckbedingungen innerhalb unkritischer Grenzen stabil. Über diesen erfindungsgemässen Beschleunigungs-Schutzanzug können konventionelle, zugelassene Fliegerkombis (Overalls) getragen werden, allenfalls mit Zusatzfunktionen zum Schutz vor ABC-Einflüssen und/oder kaltem Wasser. Der Anzug ist ausserdem mit einem elektrischen Ventilator 23 ausgerüstet, welcher von einer am Anzug getragenen Batterie versorgt wird. Von diesem Ventilator 23 führen die Belüftungsadern 21 an die verschiedenen Luftschläuche 9,10 und verlaufen wie schon gezeigt längs derselben, und sind glatt in deren Oberfläche integriert.

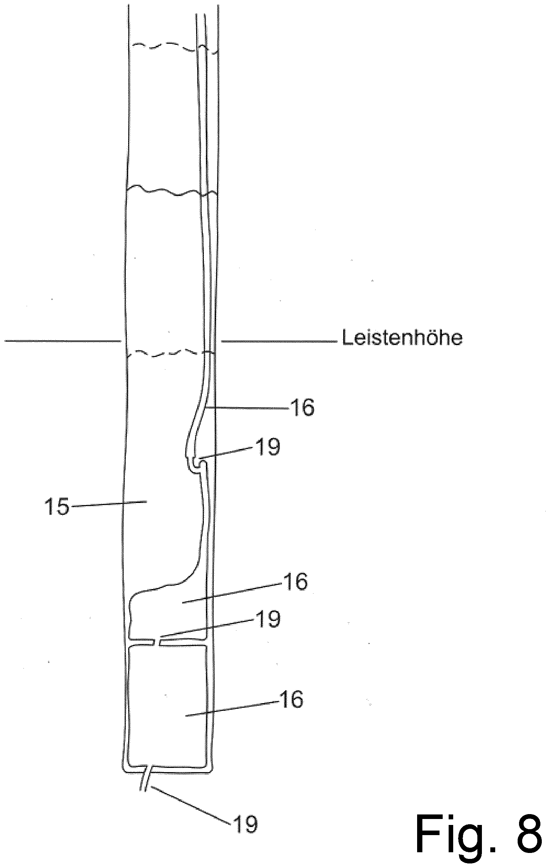

Die Figur 7 zeigt den gleichen Anzug von der Rückseite her gesehen. Gut sichtbar sind die als "Spacer" wirkenden Luftschläuche 9, welche sich von den Füssen bis über den Thorax erstrecken. In der Mitte des Rückens befindet sich noch ein breiter als "Spacer" wirkender Luftschlauch 9. Die Figur 8 zeigt einen Längsschnitt durch eine optionale Wasserader 15 in schematischer Darstellung. Drei oder mehr Lufttaschen 16 sind dargestellt. Die unterste Lufttasche 16 ist bereits ganz gefüllt, die zweite Lufttasche 16 teilweise, die dritte Lufttasche 16 ist noch leer. Die Lufttaschen 16 sind in der Wasserader 15 ortsfest angeordnet. Ferner sind sie mit einer Luftleitung 19 verbunden, welche von unten her in die Wasserader 15 mündet, und mit einer Vorrichtung verbunden ist, welche direkt oder indirekt von der Druckluftversorgung des Flugzeugs gespeist wird. Die Wasserader 15, welche bei leeren Lufttaschen 16 bis etwa auf Leistenhöhe mit Wasser gefüllt ist, wird beim Aufblasen der obersten Lufttasche 16 um das Volumen der Lufttasche 16 gehoben. Wird nun die nächste Lufttasche 16 aufgeblasen, so steigt das Wasser weiter um deren Volumen. Das Gleiche gilt beim Aufblasen der letzten Lufttasche 16. Anschliessend werden alle Lufttaschen 16 entlüftet, wodurch der Wasserspiegel auf die ursprüngliche Höhe sinkt und die zusätzlich erzeugte Spannung σ im oberen Teil der Hülle 4 des Schutzanzuges wieder den Anfangswert einnimmt. Das sequentielle Belüften und Entlüften der Lufttaschen 16 bewirkt einen Massage-Effekt, welcher die kardiovaskuläre Belastung reduziert.

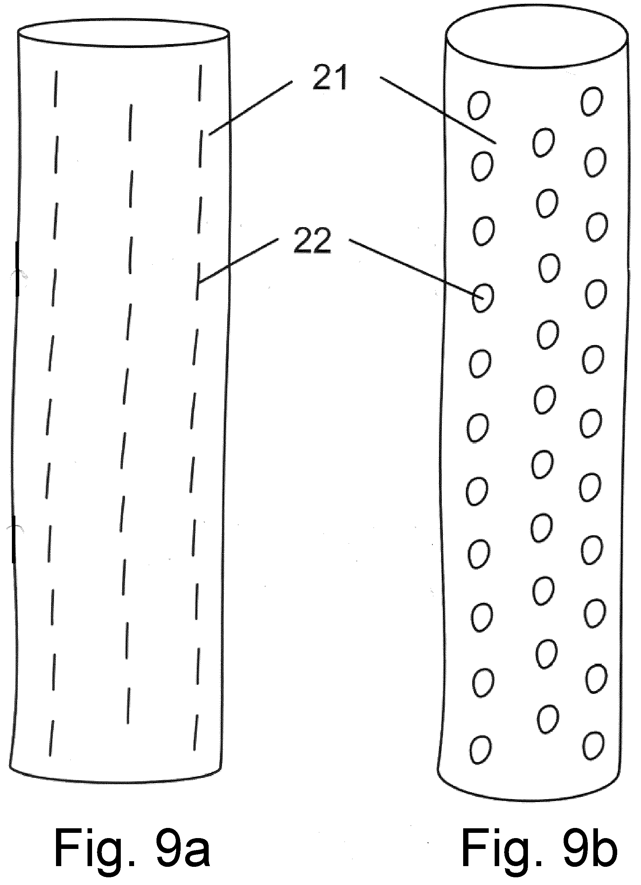

In den Figuren 9a, b sind die Belüftungsadern 21 gezeigt, welche der Belüftung und Kühlung dienen. In der Hülle 4 des Anzuges sind mehrere, ebenfalls aus einem Elastomer bestehende solche Belüftungsadern 21 eingelegt und befestigt. Diese sind im leeren Zustand flach. Sie tragen je eine Vielzahl von lippenförmigen Öffnungen 22, welche, wie in Fig. 9b gezeigt, sich unter erhöhtem Innendruck in der Belüftungsader 21 öffnen und Durchgang schaffen für Luft, welche durch die Belüftungsadern 21 strömt. Die Belüftungsadern 21 können ebenfalls an der Blase 12 angeschlossen sein, dies bedingt jedoch ein Rückschlagventil an der Blase 12, damit bei einem Druckverlust in der Speiseleitung vom Flugzeug oder in der Cockpit-Atmosphäre die Hauptfunktionen des Beschleunigungs-Schutzanzuges erhalten bleiben. Alternativ hierzu haben die Belüftungsadern 21 ihre eigene Luftversorgung, entweder flugzeugseitig oder autonom anzugsseitig mit einem Ventilator, welcher auch eine anzugsseitige Stromversorgung aufweist. Damit kann der Anzug auch belüftet werden, wenn sich der Pilot ausserhalb des Flugzeuges in Wartestellung befindet. Vom Briefingraum oder Warteraum, der oftmals klimatisiert ist, geht es vor einem Einsatz zum Flugzeug, und dort herrschen unter Umständen sehr hohe Temperaturen, denen der Pilot dann für eine Weile ausgesetzt ist. Das führt dazu, dass der Pilot in einem Schutzanzug innert weniger Minuten stark ins Schwitzen kommt. Das ist seinem Wohlbefinden sehr abträglich und beschleunigt die Ermüdung. Es ist daher von grossem Wert, wenn der Körper im Anzug wirksam gekühlt werden kann, was durch die elektrische Belüftung über den Ventilator 23 und die Belüftungsadern 21 realisiert ist.

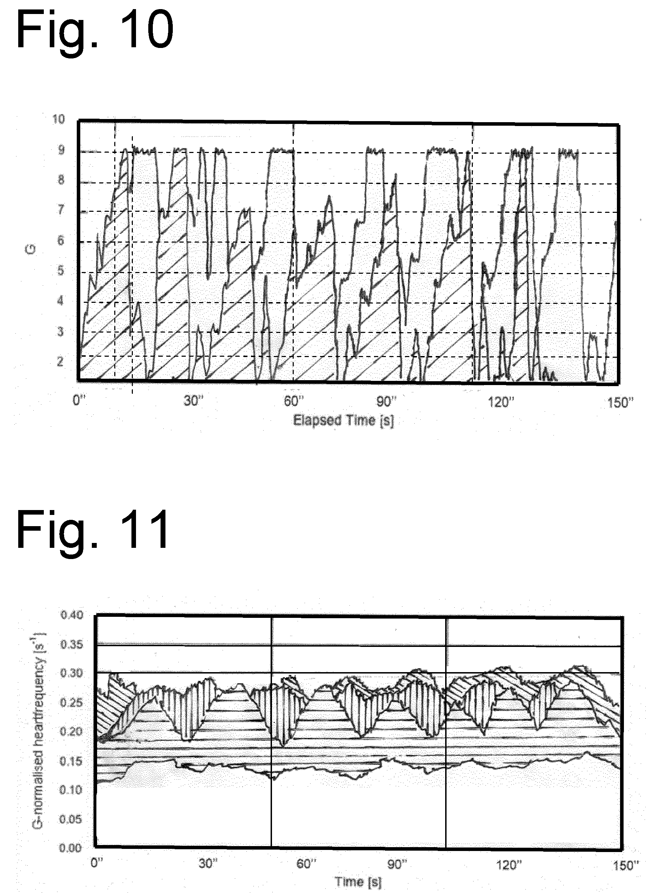

Die mit einem solchen mit unterschiedlich wirkenden "Muskeln" und "Spacern" ausgerüsteten Schutzanzug erzielbaren praktischen Ergebnisse sind erstaunlich. Sie wurden im Herbst 2011 anhand von Tests in einer der grössten Zentrifugen für Kampfpiloten gemessen und werden hier rudimentär vorgestellt. Bei den Testpersonen handelte es sich um insgesamt 11 Männer und eine Frau im Alter zwischen 27 und 56 Jahren, die keine Flugerfahrung bis hin zu 6400 Stunden Flugerfahrung aufwiesen. Die Daten wurden mit 193 Zentrifugen-Fahrten zur Simulation von 43 verschiedenen Flügen ermittelt. Die Figur 10 zeigt als Beispiel die ertragbare G-Belastung mit einem herkömmlichen G-Schutzanzug, dem sogenannten AEA-Anzug von Air Crew Equipment Assembly aus England, ohne solche unterschiedlichen Textilfächer, im Vergleich mit den Leistungen eines erfindungsgemässen G-Schutzanzuges. Aufgezeichnet ist das Integral der von einer 41-jährigen Testperson ertragenen G-Belastung über die Zeit, wobei die schraffierte Fläche das Integral mit dem herkömmlichen Schutzanzug darstellt, und das dahinter unterlegte weisse Integral jenes, das mit dem neuen Schutzanzug gemessen wurde. Es erwies sich, dass das Integral mit dem erfindungsgemässen Schutzanzug über eine Zeitdauer von 150 Sekunden sehr eindrückliche 76% grösser ausfiel!

Die Figur 11 zeigt die G-normalisierte durchschnittliche Herzfrequenz dieses Probanden beim Tragen unterschiedlicher Schutzanzüge über diese besagten 150 Sekunden der Belastung. Die schraffierten Kurven sind die Ergebnisse mit den herkömmlichen Schutzanzügen, die tiefste, weisse Kurve jene mit dem erfindungsgemässen Schutzanzug. Quantitativ ausgedrückt sind die Werte, die mit diesem Schutzanzug erzielt wurden, im Vergleich zu jenem mit der vertikalen Schraffur, das heisst im Vergleich mit dem G-Schutzanzug von Life Support System & Aircrew Equipment Assembly (AEA) aus England um sehr eindrückliche 44% tiefer ausgefallen. Die Kurve mit der horizontalen Schraffur gehört zum bisher besten G-Anzug der Marke LIBELLE G-Multiplus® wie im Eurofighter eingesetzt, und auch im Vergleich zu diesem schneidet der erfindungsgemässe Schutzanzug deutlich besser ab.

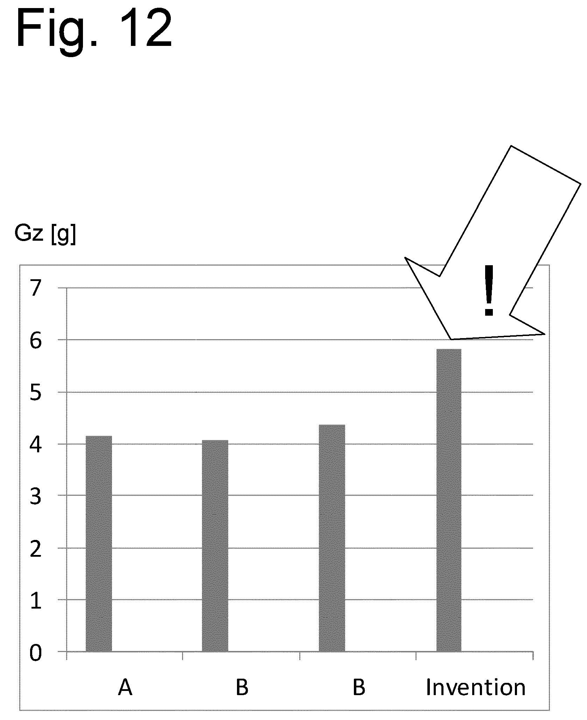

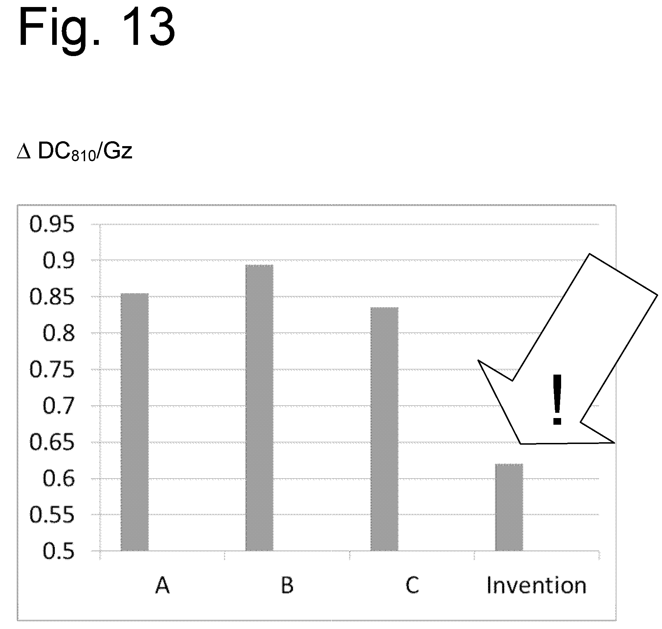

Die Figur 12 stellt die durchschnittliche erreichte G-Belastung mit verschiedenen G-Schutzanzügen anlässlich dieser Tests dar. Mit den herkömmlichen Schutzanzügen A, B und C wurden 4.15 ± 1.62 G, 4.08 ± 1.82 G und 4.36 ± 2.39 G erreicht, während mit dem hier vorgestellten G-Schutzanzug 5.82 ± 2.78 G erreicht wurden! Und schliesslich ist in Figur 13 als schlagendstes Ergebnis die von den kardiovaskulären Parametern abgeleitete durchschnittliche Variation der Direktkomponenten (Gleichanteile) im Vergleich zur Grundlinie, unter Berücksichtigung der normalisierten und relativ erreichten G-Belastungen in der vertikalen z-Achse wiedergegeben, der sogenannte Volume Loss Index (Abstromindex), das heisst $DC_{810-normalisiert}$ geteilt durch die durchschnittliche Gz-Belastung. Das gezeigte Ergebnis spricht für sich. Ein solcher Anzug wiegt ausserdem bloss noch 1'050 Gramm und ist daher ähnlich bequem zu tragen wie ein Pyjama oder wie Unterwäsche - kaum mehr zu spüren. Und doch sind seine Funktionen sehr überzeugend und übertreffen die Leistungen bisheriger G-Schutzanzüge sehr deutlich.

**Patentansprüche**

1. Beschleunigungs-Schutzanzug für Piloten von Hochleistungs-Flugzeugen mit einer Hülle (4) aus dehnungsarmem textilen Material, wobei mindestens Teile der Hülle (4) doppelwandig ausgeführt sind und damit auf der Innen- oder Aussenseite der Hülle (4) Fächer (6) bilden, in welche Luftschläuche (2) eingelegt sind, bestehend aus flexiblem und dehnbarem Kunststoff, und welche Luftschläuche (2) mit Beschleunigungs-abhängigen Luftdrucken beaufschlagbar sind und dadurch als Blasen dehnbar sind, *dadurch gekennzeichnet,* **dass** der Anzug mit mindestens zwei verschiedenen Arten von Fächern (6) mit Luftschläuchen (2) zur Bildung von Luftblasen ausgerüstet ist, nämlich erstens mit als "Spacer" (10) zu wirkenden Fächern (6), die auf ihrer dem Körper des Trägers zugewandten Seite aus einem elastischen textilen Gewebe oder Gewirk bestehen, während die gegenüberliegende Seite des Faches (6) aus unelastischem Material besteht, und die einen in ihrem Innern lose verlaufenden Luftschlauch (2) enthalten, sodass bei Druckbeaufschlagung mit dem Luftschlauch (2) eine Querschnittskontur bildbar ist, welche von jener des ihn enthaltenden Faches (6) abweicht, wobei das Volumen des Luftschlauches (2) im Innern des Faches (6) kleiner ist als das Innenvolumen des Faches (6), und zweitens mit als "Muskeln" (9) zu wirkenden Fächern (6), bei denen die Fächer (6) innen allseits mit an ihre Innenseite angeschmiegtem Schlauchmaterial ausgeschlagen sind, sodass die Fächer und Luftschläuche immer und überall die gleiche Querschnittskontur aufweisen, und weiter dass eine Druckblase (12) im Schutzanzug vorhanden ist, welche sich auf der Bauchregion des Trägers des Beschleunigungs-Schutz-Anzuges befindet und an welcher alle Luftschläuche (9,10) frei kommunizierend mit allen Luftschläuchen in allen Fächern (6) angeschlossen sind, wobei die Druckblase (12) mindestens ein Hauptventil (13) aufweist, an welches die Druckluftversorgung des Beschleunigungs-Schutzanzuges anschliessbar ist, und welches gleichzeitig so eingerichtet ist, dass es schliesst, falls der Versorgungsluftdruck und/oder jener im Cockpit zusammenbricht.

2. Beschleunigungs-Schutzanzug nach Anspruch 1, ***dadurch gekennzeichnet, dass*** bei den als "Muskeln" zu wirkenden Fächern diese Fächer (6) aus dem gleichen Material bestehen wie deren Hülle (4), wodurch die "Muskeln" (9) in ihrem Volumen beschränkt sind, und bei den als "Spacer" (10) zu wirkenden Fächern die innere Seite der Fächer (6) aus einem dehnbaren textilen Material besteht, sodass die "Spacer" (10) darin im Rahmen der Dehnbarkeit der Fächer ausdehnbar sind.

3. Beschleunigungs-Schutzanzug nach einem der vorangehenden Ansprüche, ***dadurch gekennzeichnet, dass*** die Fächer (6) für die als Spacer zu wirken bestimmten Luftschläuche (2) geschlossene, dünnwandige Blasen (25) an ihren gegen die Aussenseite des Schutzanzuges gerichteten Seiten aufweisen, zum Ausgleich des reduzierten Höhendruckes.

4. Beschleunigungs-Schutzanzug nach einem der vorangehenden Ansprüche, ***dadurch gekennzeichnet, dass*** die Muskeln (9) und Spacer (10) des Beschleunigungs-Schutzanzuges sich über die die folgenden vom Schutzanzug zu bedeckenden Körperteile erstrecken: Arme, Beine, Thorax, Rücken und Bauch.

5. Beschleunigungs-Schutzanzug nach einem der vorangehenden Ansprüche, ***dadurch gekennzeichnet***, der Schutzanzug einen elektrischen Ventilator (23) einschliesst, zum Ansaugen von Umgebungsluft und Einspeisen derselben in Belüftungsadern (21), die im Schutzanzug gesondert verlaufen, und in den als "Spacern" zu wirkenden Fächern Belüftungsadern (21) mit einer Anzahl Löchern (22) mit Schliesslippen aufgebracht sind, über welche durch den Ventilator (23) über die gesonderten Belüftungsadern (21) Luft in das Fächerinnere abgebbar ist, welche durch das Fächermaterial diffundierbar ist, zur Kühlung der Körperoberfläche des Trägers Beschleunigungs-Schutzanzuges.

6. Beschleunigungs-Schutzanzug nach einem der Ansprüche 1 bis 4, ***dadurch gekennzeichnet, dass*** der Schutzanzug einen elektrischen Ventilator (23) einschliesst, zum Ansaugen von Umgebungsluft und Einspeisen derselben in Belüftungsadern (21), die im Schutzanzug gesondert verlaufen, und in den als "Muskeln" zu wirkenden Fächern Belüftungsadern (21) mit einer Anzahl Löchern (22) mit Schliesslippen gegenüber der Innenseite der Fächer integriert sind, über welche durch den Ventilator (23) über die gesonderten Lüftungsadern Luft durch das anliegende Fächermaterial diffundierbar ist, zur Kühlung der Körperoberfläche des Trägers Beschleunigungs-Schutzanzuges.

7. Beschleunigungs-Schutzanzug nach einem der Ansprüche 1 bis 4, ***dadurch gekennzeichnet, dass*** der Schutzanzug einen elektrischen Ventilator (23) einschliesst, zum Ansaugen von Umgebungsluft und Einspeisen derselben in Belüftungsadern (21), die im Schutzanzug gesondert verlaufen, und dass längs der Luftschläuche in den als "Spacern" zu wirkenden Fächern Belüftungsadern (21) mit einer Anzahl Löchern (22) mit Schliesslippen aufgebracht sind, über welche bei erhöhtem Luftdruck über die Lüftungsadern (21) Luft in das Fächerinnere abgebbar ist, welche durch das Fächermaterial diffundierbar ist, zur Kühlung der Körperoberfläche des Trägers Beschleunigungs-Schutzanzuges, wie auch längs der Luftschläuche in den als "Muskeln" zu wirkenden Fächern Belüftungsadern (21) mit einer Anzahl Löchern (22) mit Schliesslippen gegenüber der Innenseite der Fächer integriert sind, über welche bei erhöhtem Luftdruck über die Lüftungsadern Luft abgebbar ist, welche durch das anliegende Fächermaterial diffundierbar ist, zur Kühlung der Körperoberfläche des Trägers Beschleunigungs-Schutzanzuges.

8. Beschleunigungs-Schutzanzug nach einem der vorangehenden Ansprüche, ***dadurch gekennzeichnet, dass*** auf die Fläche der am Körper anzuliegenden Fächerseiten des Beschleunigungs-Schutzanzuges bezogen mindestens 40% als "Spacer" zu wirkende Fächer sind, und mindestens 40% als "Muskeln" zu wirkende Fächer sind.

9. Beschleunigungs-Schutzanzug nach einem der vorangehenden Ansprüche, ***dadurch gekennzeichnet, dass*** auf die Fläche der am Körper anzuliegenden Fächerseiten des Beschleunigungs-Schutzanzuges bezogen die Hälfte als "Spacer" zu wirkende Fächer sind, und die Hälfte als "Muskeln" zu wirkende Fächer sind.

**10.** Beschleunigungs-Schutzanzug nach einem der vorangehenden Ansprüche, *dadurch gekennzeichnet,* **dass** die Druckluftversorgung für die Lufttaschen (16) die Druckblase (12) ist, und weiter eine Vorrichtung vorhanden ist, welche der Druckblase (12) nachgeschaltet ist, und mittels welcher ein getaktetes Aufpumpen der Lufttaschen (16) erzeugbar ist.

**11.** Beschleunigungs-Schutzanzug nach Anspruch 10, *dadurch gekennzeichnet,* **dass** die der Druckblase (12) nachgeschaltete Vorrichtung für das getaktete Aufpumpen der Lufttaschen (16) mit Fächern der ersten Art zusammenwirkt, welche Fächer sich von den Füssen bis zum Halsausschnitt erstrecken, und in die mit Wasser teilweise gefüllte Adern eingelegt sind und mehrere Lufttaschen enthalten, welche innen in den Wasseradern befestigt sind und mit Druckluft sequentiell von unten nach oben befüllbar sind, sodass Wasser von unten nach oben verdrängbar ist und einen rhythmisch ansteigenden und bei sequentiellem oder totalem Entlüften der Lufttaschen einen sinkenden Druck im Beschleunigungs-Schutz-Anzug aufbauen, zur Entlastung des Kreislaufes bzw. zur Erhöhung des Füllgrades des Herzens des Trägers.

**12.** Beschleunigungs-Schutzanzug nach einem der vorangehenden Ansprüche, *dadurch gekennzeichnet,* **dass** die Luftversorgung der Belüftungsadern (21) durch die Blase (12) gespeist ist.

**13.** Beschleunigungs-Schutzanzug nach einem der vorangehenden Ansprüche, *dadurch gekennzeichnet,* **dass** der Druckblase (12) ein weiteres Rückschlagventil nachgeschaltet und den Belüftungsadern (21) vorgeschaltet ist, welches bei einem plötzlichen Druckverlust in der Speiseleitung vom Flugzeug oder/und in der Cockpit-Atmosphäre schliesst.

**Claims**

**1.** Acceleration protective suit for pilots of high-performance aircraft with a covering (4) made of stretch-resistant textile material, where at least parts of covering (4) are designed with two walls and thus form compartments (6) on the inner and outer side of the covering (4), where air tubes (2) are inserted in the compartment, consisting of flexible and stretchable plastic, and these air tubes (2) can be supplied with acceleration-dependent air pressures and thus can be stretched as bladders, *characterised in that* the suit is equipped with at least two different types of compartments (6) with air tubes (2) for forming air bladders, namely the first type with compartments (6) acting as "spacers" (10), which have loose air tubes inside their compartments, so that their contour can be formed during compressed air supply with the air tube (2), which in turn differs from the compartment containing it, whereby the volume of the air tubes (2) inside the compartments (6) is smaller than the inner volume of the compartments (6) and the second type with compartments (6) acting as "muscles" (9), where the compartments (6) are clung inside with tube material in their inner side, so that the compartments and air tubes always have the same contour, and in addition there is a pressure bladder (12) in the protective suit, which is located in the abdominal area of the wearer of the acceleration protective suit and to which all air tubes (9, 10) are connected, communicating freely with all air tubes in all compartments (6), whereby the pressure bladder (12) has at least one main valve (13) to which the compressed air supply of the acceleration protective suit can be connected and which is set up in such a way that it closes, if the supply air pressure and/or pressure in cockpit drops.

**2.** Acceleration protective suit according to claim 1, **characterised in that**, in case of compartments acting as "muscles", these compartments (6) are made of the same inelastic material like the covering (4), whereby the "muscles" (9) are restricted in their maximal volume and in case of compartments acting as "Spacers" the inner side of the compartments (6) is made of stretchable elastic material, so that the "spacers" (10) can be stretched as part of the elasticity of the compartments.

**3.** Acceleration protective suit according to one of the previous claims, **characterised in that**, the compartments (6) for the air tubes (2) meant to act as spacer have closed, thin-walled bladders (25) at the sides positioned against the outer side of the protective suit to compensate for the reduced barometric pressure.

**4.** Acceleration protective suit according to one of the previous claims, **characterised in that**, the muscles (9) and spacers (10) of the acceleration protective suit stretch over the following body parts to be covered by the protective suit: Arms, legs, thorax, spine and stomach.

**5.** Acceleration protective suit according to one of the previous claims, **characterised in that**, the protective suit includes an electrical fan (23) for sucking in ambient air and supplying the same to the ventilation veins (21), which are laid separately in the protective suit and ventilation veins (21) with a number of holes (22) with closing lips are placed in the compartments that act as "spacers", through which air can be supplied to the inner side of the compartments by the fan (23) over separate ventilation veins (21), where the air can be diffused by the compartment material,

for cooling the body surface of the wearer of the acceleration protective suit.

6. Acceleration protective suit according to one of the previous claims 1 to 4, **characterised in that**, the protective suit includes an electrical fan (23) for sucking in ambient air and supplying the same to the ventilation veins (21), which are laid separately in the protective suit and ventilation veins (21) with a number of holes (22) with closing lips are integrated in the compartments that act as "muscles", through which air can supplied to the inner side of the compartments by the fan (23) over separate ventilation veins, where the air can be diffused by the compartment material, for cooling the body surface of the wearer of the acceleration protective suit.

7. Acceleration protective suit according to one of claims 1 to 4, **characterised in that**, the protective suit includes an electrical fan (23) for sucking in ambient air and supplying the same to the ventilation veins (21) that are laid separately in the protective suit, and that ventilation veins (21) with a number of holes (22) with closing lips are placed in the compartments acting as "spacers" along air tubes, whereby air can be delivered into the inner side of the compartment via the ventilation veins (21) when there is increased air pressure, whereby air can be diffused by the compartment material for cooling the body surface of the wearer f the protective suit, and likewise there are ventilation veins (21) with a number of holes (22) with closing lips in the compartments acting as "muscles" along the air tubes, which are integrated opposite to the inner side of the compartments, where air can be delivered via ventilation veins when there is increased air pressure and which can be diffused by the adjacent compartment material for cooling the body surface of the wearer of the protective suit.

8. Acceleration protective suit according to one of the previous claims, **characterised in that**, at least 40% of the compartments located on the surface of the compartment sides of the acceleration protective suit adjacent to the body are considered as compartments acting as spacers" and at least 40% are compartments acting as "muscles".

9. Acceleration protective suit according to one of the previous claims, **characterised in that**, half of the compartments located on the surface of the compartment sides of the acceleration protective suit adjacent to the body are considered as compartments acting as "spacers" and half are compartments acting as muscles".

10. Acceleration protective suit according to one the previous claims, **characterised in that**, the pressure bladder (12) is the supplier of compressed air to the air pockets (16) and also has a device to which the air bladder (12) is connected and with which a clocked or cycled feeding for pumping up of the air pockets (16) can be achieved.

11. Acceleration protective suit according to claim 10, **characterised in that**, the device for clocked pumping of air pockets (16) connected to the pressure bladder (12) interacts with compartments of the first type, where the compartments stretch from the feet up to the throat section and which has veins partially filled with water and multiple air pockets, which are fixed on the inside in the water veins and can be filled with compressed air sequentially from bottom to top, so that water can be pushed from bottom to top which builds up a rhythmically increasing pressure, and in the case of sequential or total venting of the air pockets, a decreasing pressure in the acceleration protective suit, for relieving circulation or for increasing of the electrolyte level of the heart of the wearer.

12. Acceleration protective suit according to one of the previous claim, **characterised in that**, the air supply of the ventilation veins (21) is supplied by the bladder (12).

13. Acceleration protective suit according to one of the previous claim, **characterised in that**, the pressure bladder (12) connects downstream to another check valve and upstream to ventilation veins (21), which closes if there is a sudden pressure loss in the supply line of the aircraft and/or in the cockpit atmosphere.

**Revendications**

1. Combinaison de protection contre les accélérations pour des pilotes d'avions haute performance composée d'une enveloppe (4) dans un matériau textile peu extensible, où au moins une partie de l'enveloppe (4) est réalisée par deux parois qui forment ainsi sur le côté intérieur ou extérieur de l'enveloppe (4) des compartiments (6) dans lesquels on a inséré des tubes à air (2) composés d'une matière plastique flexible et extensible, et sur lesquels tubes à air (2) on peut appliquer des pressions d'air en fonction de l'accélération; lesquels tubes à air étant réalisés ainsi comme des bulles d'air extensibles, **caractérisé en ce que** la combinaison est équipée d'au moins deux différents types de compartiments (6) de tubes à air (2) pour former les bulles d'air, c'est-à-dire que la combinaison est équipée premièrement de compartiments (6) agissant comme "éléments d'écartement" (10), lesquels compartiments sont composés sur le côté orienté vers le corps du porteur d'un tissu ou d'un tulle élastique et textile, le côté opposé du compartiment (6) étant composé d'un matériau non élastique, et lesquels compartiments comportent dans leur intérieur de tubes à air (2) s'étendant librement, de manière à former avec les tubes à air (2) un contour de la section transversale (lorsqu'on applique une pression) qui s'écarte du contour du compartiment (6) se trouvant à l'intérieur dudit compartiment; le volume des tubes à air (2) se trouvant à l'intérieur du compartiment (6) étant plus petit que le volume intérieur du compartiment (6) et deuxièmement lesdits tubes sont couverts de compartiments (6) agissant comme "muscles" (9), où lesquels compartiments (6) sont recouverts de tous les côtés d'un matériau de tube, de manière à ce que les compartiments et les tubes à air présentent toujours et partout le même contour de la section transversale, et qu'une bulle de pression (12) existe dans la combinaison de protection qui se trouve sur la zone ventrale du porteur de ladite combinaison de protection contre l'accélération et sur laquelle zone tous les tubes d'air (9,10) sont connectés de façon à communiquer librement avec les tubes à air dans tous les compartiments (6) où la bulle de pression (12) présente au moins une valve principale (13) à laquelle on peut connecter l'alimentation en air de pression de la combinaison de protection contre l'accélération, et laquelle valve est réalisée de manière à se fermer si la pression d'air d'alimentation et/ou la pression s'effondre dans le cockpit.

2. Combinaison de protection contre les accélérations selon la revendication 1, **caractérisé en ce que** les compartiments agissant comme muscle sont composés de la même matière que l'enveloppe (4); le volume des muscles étant limité et le côté intérieur des compartiments (6) agissant comme "élément d'écartement" (10) est composé d'une matière textile extensible, de manière à ce que les "éléments d'écartement" soient susceptibles de s'étendre dans le cadre de l'extension des compartiments.^

3. Combinaison de protection contre les accélérations selon une des revendications précédentes, **caractérisée en ce que** les compartiments (6) comportent pour les tubes d'air (2) agissant come éléments d'écartement des bulles (25) à faible paroi fermée sur les côtés orientés vers le côté extérieur de la combinaison de protection destinée à équilibrer la pression atmosphérique.

4. Combinaison de protection contre les accélérations selon une des revendications précédentes , **caractérisée en ce que** les muscles (9) et les éléments d'écartement (10) de la combinaison de protection contre l'accélération s'étendent sur les parties du corps suivantes, couvertes par la combinaison de protection : les bras, les jambes, le thorax, le dos et le ventre.

5. Combinaison de protection contre l'accélération selon une des revendications précédentes , **caractérisée en ce que** la combinaison de protection comporte un ventilateur électrique (23) pour aspirer l'air ambiant et l'introduire dans les canaux d'aération (21) qui s'étendent séparément dans la combinaison de protection, et **en ce que** des canaux d'aération 21 sont prévus dans les compartiments agissant comme "éléments d'écartement" et sont pourvus de plusieurs trous équipés de lèvres de fermeture, à travers lesquels trous on peut expulser au moyen du ventilateur (23) et des canaux d'aération (21) séparés, de l'air à l'intérieur des compartiments, à travers lesquels canaux on peut diffuser le matériau du compartiment pour refroidir la combinaison de protection contre l'accélération de la surface du corps du porteur.

6. Combinaison de protection contre l'accélération selon une des revendications 1 à 4, **caractérisée en ce que** la combinaison de protection comporte un ventilateur électrique (23) pour aspirer l'air ambiant et l'introduire dans les canaux d'aération (21) qui s'étendent séparememt dans la combinaison de protection, et **en ce que** des canaux d'aération (21) sont prévus dans les compartiments agissant comme "éléments d'écartement" et sont pourvus de plusieurs trous équipés de lèvres de fermeture qui sont situés en face du côté intérieur des compartiments, à travers lesquels trous on peut expulser au moyen du ventilateur (23) et des canaux d'aération (21) séparés, de l'air à l'intérieur des compartiments, à travers lesquels canaux on peut diffuser le matériau du compartiment pour refroidir la combinaison de protection contre l'accélération de la surface du corps du porteur.

7. Combinaison de protection contre l'accélération selon une des revendications 1 à 4, **caractérisée en ce que** la combinaison de protection comporte un ventilateur électrique (23) pour aspirer l'air ambiant et l'introduire dans les canaux d'aération (21) qui s'étendent séparément dans la combinaison de protection, et **en ce que** les muscles sont prévus dans les compartiments agissant comme "éléments d'écartement" et sont pourvus de plusieurs trous équipés de lèvres de fermeture qui sont situés en face du côté intérieur des compartiments, à travers lesquels trous on peut expulser au moyen du ventilateur (23) et des canaux d'aération (21) séparés, de l'air à l'intérieur des compartiments, à travers lesquels canaux on peut diffuser le matériau du compartiment pour refroidir la combinaison de protection contre l'accélération de la surface du corps du porteur et **en ce que** les "muscles" sont prévus dans les compartiments agissant comme éléments d'écartement et sont pourvus de plusieurs trous équipés de lèvres de fermeture qui sont situés en face du côté intérieur des compartiments, à travers lesquels trous on peut expulser au moyen du ventilateur (23) et des canaux d'aération (21) séparés, de l'air à l'intérieur des compartiments, à travers lesquels canaux on peut diffuser de l'air le matériau du compartiment pour refroidir la combinaison de protection contre l'accélération de la surface du corps du porteur.

8. Combinaison de protection contre l'accélération selon une des revendications précédentes, **caractérisée en ce que**, comparé aux côtés du compartiment de la combinaison de protection contre l'accélération qui sont appliqués sur la surface du corps, au moins 40% sont des compartiments agissant comme "éléments d'écartement" et au moins 40% sont des compartiments agissant comme "muscles".

9. Combinaison de protection contre l'accélération selon une des revendications précédentes, **caractérisée en ce que**, comparé aux côtés du compartiment de la combinaison de protection contre l'accélération qui sont appliqués sur la surface du corps, au moins la moitié sont des compartiments agissant comme éléments d'écartement et la moitié sont des compartiments agissant comme "muscles".

10. Combinaison de protection contre l'accélération selon une des revendications précédentes, **caractérisée en ce que** l'alimentation en air de pression pour les poches d'air (16) est la bulle de pression (12) et en plus il existe un dispositif qui se trouve en aval de la bulle de pression (12) et au moyen duquel on peut produire un pompage cadencé de la poche d'air (16).

11. Combinaison de protection contre l'accélération selon la revendication 10, **caractérisée en ce que** le dispositif se trouvant en aval de la bulle de pression (12) collabore pour le pompage cadencé des poches d'air (16) avec les compartiments du premier type, lesquels compartiments s'étendent à partir des pieds jusqu'à l'encolure et des canaux remplis partiellement avec de l'eau sont aménagés dans lesdits compartiments fixés à l'intérieur dans les canaux d'air et sont susceptibles d'être remplis de façon séquentielle du bas vers le haut avec de l'air sous pression, de manière à ce que de l'eau puisse être purgée du bas vers le haut et lesdites poches d'air génèrent une pression qui augmente de façon rythmique et génère une pression qui diminue lors d'une purge séquentielle ou totale des poches d'air dans la combinaison de protection contre l'accélération, destinée à soulager la circulation sanguine, respectivement sert à augmenter le degré de remplissage du coeur du porteur.

12. La combinaison de protection contre l'accélération selon une des revendications précédentes, **caractérisée en ce que** l'alimentation en air des canaux d'aération (21) est effectuée par la bulle (12).

13. La combinaison de protection contre l'accélération selon une des revendications 1 précédentes, **caractérisée en ce qu'**une valve de rappel supplémentaire est mise en aval par rapport à la bulle de pression (12) et est mise en amont par rapport aux canaux d'aération (21), ladite valve étant fermée lors d'une perte de pression subite dans le conduit d'alimentation de l'avion et/ou dans l'atmosphère du cockpit.

Fig. 1a

Fig. 1b

Fig. 2a

Fig. 2b

Fig. 3a

Fig. 3b

# Fig. 4

# Fig. 5

Fig. 6

9

9

10

10

9

Fig. 7

Leistenhöhe

15

16

19

16

19

16

19

Fig. 8

21

22

Fig. 9a          Fig. 9b

# Fig. 10

# Fig. 11

# Fig. 12

# Fig. 13

$\Delta$ DC$_{810}$/Gz

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1755948 A
- US 20070289050 A
- JP 2008012958 B
- DE 102007053236
- WO 03020586 A1